## Europäisches Patentamt

## European Patent Office

## Office européen des brevets

(19) 

(11) Numéro de publication: **0 208 232 B1**

(12) **FASCICULE DE BREVET EUROPEEN**

(45) Date de publication du fascicule du brevet:
14.06.89

(51) Int. Cl.⁴: **G 01 M 3/22**

(21) Numéro de dépôt: **86108931.6**

(22) Date de dépôt: **01.07.86**

(54) Machine pour contrôler l'étanchéité de pièces par la méthode dite de ressuage.

(30) Priorité: **04.07.85 FR 8510241**

(43) Date de publication de la demande:
**14.01.87 Bulletin 87/3**

(45) Mention de la délivrance du brevet:
**14.06.89 Bulletin 89/24**

(84) Etats contractants désignés:
**AT BE CH DE FR GB IT LI LU NL SE**

(56) Documents cités:
**US-A- 3 126 734**
**US-A- 4 184 362**

**WESTERN ELECTRIC, TECHNICAL DIGEST, no. 35, juillet 1974, pages 19,20, New York, US; R.M. FILEK et al.: "Testing and sorting apparatus"**
**PATENTS ABSTRACTS OF JAPAN, vol. 6, no. 237 (P-157)[1115], 25 novembre 1982; & JP-A-57 137 835 (HITACHI SEISAKUSHO K.K.) 25-08-1982**
**SOLID STATE TECHNOLOGY, vol. 26, no. 7, juillet 1983, pages 45,46, Port Washington, New York, US; "Automated leak tester"**

(73) Titulaire: **ALCATEL CIT, 33, rue Emeriau, F-75015 Paris (FR)**

(72) Inventeur: **Veyrat, Gilles, Minzier, F-74270 Frangy (FR)**

(74) Mandataire: **Weinmiller, Jürgen, Lennéstrasse 9 Postfach 24, D-8133 Feldafing (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une machine pour contrôler l'étanchéité de pièces par la méthode dite de ressuage.

Pour contrôler l'étanchéité de pièces, il existe plusieurs méthodes. Une méthode connue, est de faire le vide dans la pièce à contrôler et à la mettre en communication avec un détecteur de fuite puis à asperger ensuite extérieurement la pièce avec un gaz traceur. Si la pièce présente des fissures, le gaz pénètre dans la pièce et est détecté par le détecteur. Cependant, la pièce à contrôler peut n'avoir aucun orifice d'accès pour y faire le vide, c'est le cas par exemple des circuits électroniques intégrés. On utilise alors la méthode dite de ressuage qui consiste à placer la pièce à contrôler sous une cloche contenant de l'hélium sous une pression de quelques atmosphères. Ensuite, la pièce est mise à l'air libre pour l'aérer puis à nouveau, elle est placée sous une cloche reliée à une pompe à vide et à un détecteur. L'hélium qui a pu pénétrer dans des éventuelles fissures de la pièce est alors détecté.

L'invention s'applique donc pour le contrôle d'étanchéité de telles pièces n'ayant aucun orifice d'accès interne et concerne une machine pour réaliser le test d'étanchéité proprement dit c'est-à-dire que la machine reçoit des pièces préalablement pressurisées en atmosphère de gaz traceur puis aérées.

L'invention a ainsi pour objet une machine pour contrôler l'étanchéité de pièces par la méthode dite de ressuage, caractérisée en ce qu'elle comprend: une chambre de test pivotante dont une première extrémité est ouverte et dont une seconde extrémité opposée est fermée et comporte un axe de rotation horizontal, une rampe de chargement desdites pièces, un organe d'accostage permettant de réaliser, sur commande, la communication étanche entre un détecteur de fuite et l'extrémité ouverte de ladite chambre, une rampe de déchargement à deux voies munie des moyens d'orientation vers l'une ou l'autre voie et des moyens pour commander le pivotement de ladite chambre dans trois orientations possibles, la première selon un angle α au-dessus de l'horizontale alignant la chambre avec la rampe de chargement, la deuxième selon l'horizontale en alignement avec ledit moyen d'accostage et la troisième selon un angle β au-dessous de l'horizontale en alignement de la rampe de déchargement, les angles α et β étant suffisants pour permettre le déplacement de ladite pièce dans la chambre par simple gravité.

Selon une réalisation préférée de l'invention, ledit organe d'accostage comprend un piston mobile creux relié par une liaison souple audit détecteur de fuite, ledit piston pouvant coulisser à l'intérieur d'un cylindre fixe, le cylindre et le piston coopérant avec des moyens de commande permettant le déplacement dans un sens et dans l'autre du piston mobile dans le cylindre fixe, l'extrémité ouverte de ladite chambre et l'extrémité du piston opposée à sa liaison avec ledit détecteur comportant des moyens assurant l'étanchéité de la jonction entre la chambre et ledit piston mobile lorsque le piston est en position d'accostage contre l'extrémité ouverte de ladite chambre.

On va maintenant donner la description d'un exemple de réalisation de l'invention, faite ci-après en regard du dessin annexé dans lequel:

la figure 1 montre la machine selon l'invention,

la figure 2 montre en vue agrandie la chambre pivotante et l'organe d'accostage,

la figure 3 est une vue montrant la section de la chambre pivotante selon la ligne III-III de la figure 2,

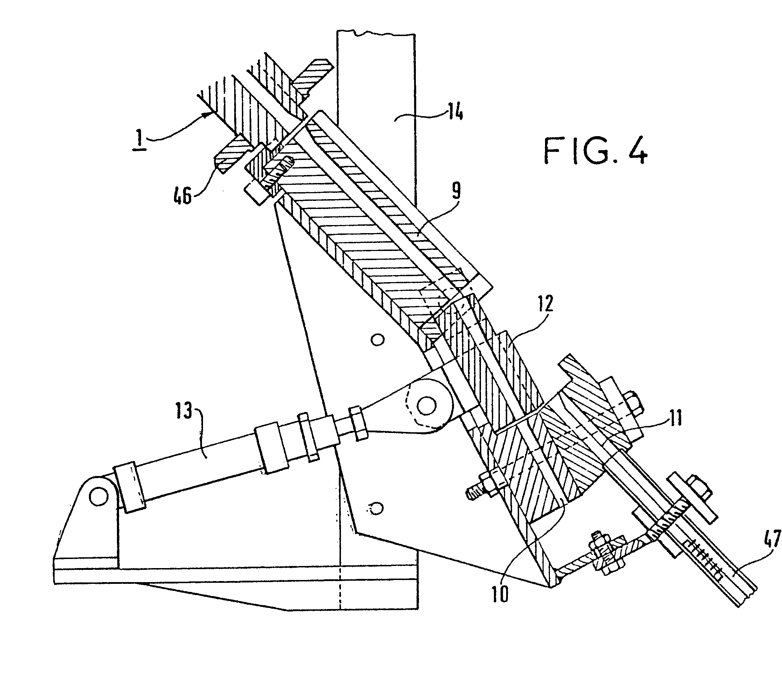

la figure 4 est une vue agrandie montrant la rampe de déchargement à deux voies.

En se référant aux figures, la machine selon l'invention comprend essentiellement une chambre pivotante 1 comportant une première extrémité 2 ouverte et une seconde extrémité 3 fermée.

La chambre pivotante comporte au voisinage de son extrémité fermée, un axe de rotation 4 horizontal permettant le pivotement de la chambre. La rotation de la chambre est commandée par un vérin 5.

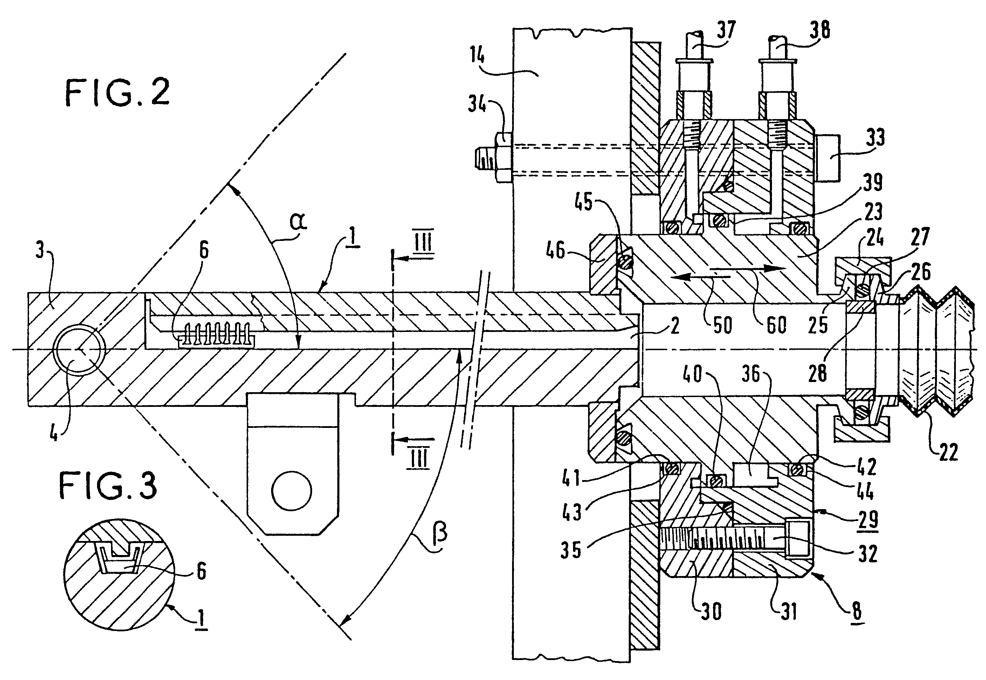

La figure 3 montre la section de la chambre, un circuit électronique intégré 6 à tester y est contenu.

La machine comporte en outre une rampe de chargement 7, un organe d'accostage 8 et une rampe de déchargement 9 à deux voies de sortie 10 et 11 alimentées par une rampe d'orientation 12 dont la position est commandée par un vérin 13 articulé. Ces éléments sont liés à un bâti 14.

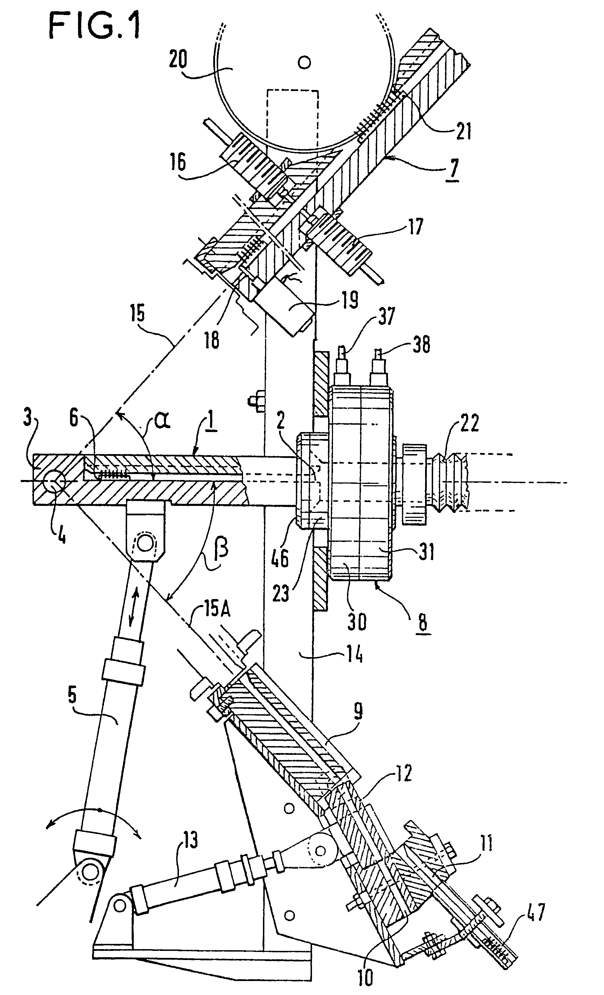

La chambre pivotante 1 peut prendre trois positions: la première selon un angle α au-dessus de la position horizontale, en alignement avec la rampe de chargement 7, cette position est fictivement représentée sur la figure 1 par le trait mixte 15 et par le tracé en traits fins de l'extrémité de la chambre pivotante; une deuxième position horizontale, qui est celle représentée sur les figures 1 et 2 et qui place la chambre dans l'alignement de l'organe d'accostage 8; et une troisième position faisant un angle β vers le bas par rapport à la position horizontale et alignant la chambre pivotante 1 avec la rampe de déchargement 9. Cette dernière position est également fictivement représentée sur la figure 1 par le trait mixte 15A et par le tracé en traits fins de l'extrémité de la chambre pivotante. Les angles α et β sont avantageusement, mais non nécessairement, égaux. En outre, ils ont une valeur suffisamment grande pour permettre le glissement par simple gravité des dispositifs 6 à tester.

La rampe de chargement 7 est munie d'un dispositif électro-optique 16-17 de comptage qui permet de compter le passage de chaque circuit. Ceux-ci sont arrêtés par une butée escamotable 18 manoeuvrée par un électro-aimant 19. Une roue motrice 20 munie d'un patin de caoutchouc permet à volonté de retenir ou de libérer les circuits 21 arrivant dans la rampe de chargement 7.

La figure 2 représente en vue agrandie l'organe d'accostage 8 qui permet de relier d'une manière étanche la chambre pivotante 1, par son extrémité ouverte 2, avec un détecteur de fuite non représenté muni de moyens de pompage et de réaliser ainsi le test d'étanchéité du ou des circuits intégrés tels que 6 situés dans la chambre pivotante. L'organe d'accostage 8 est relié au détecteur par une liaison souple 22.

L'organe d'accostage 8 comprend un piston creux 23 lequel est relié à ladite liaison souple 22 d'une manière étanche au moyen d'un collier de serrage 24 serrant deux brides d'extrémité 25 et 26 contre un joint torique 27 dont l'écrasement est limité par une bague 28. Le piston creux 23 peut coulisser à l'intérieur d'un cylindre fixe 29, réalisé en deux parties 30 et 31 reliées par des vis telles que 32, et fixé au bâti 14 par des vis et écrous, tels que 33 et 34. Un joint 35 assure l'étanchéité de l'assemblage des deux parties 30 et 31. L'alésage du cylindre 29 est ouvert à ses deux extrémités de telle sorte que le piston 23 traverse complètement le cylindre, en outre, une chambre annulaire 36 est aménagée dans cet alésage. Des conduites pneumatiques 37 et 38 aboutissent aux deux extrémités de cette chambre annulaire 36 permettant d'actionner dans un sens ou dans l'autre selon les flèches 50 et 60, le piston creux 23 qui comporte une collerette 39 logée dans ladite chambre la séparant, d'une manière étanche grâce à un joint 40, en deux parties dont l'étanchéité du côté externe est respectivement assurée par des joints 41 et 42 logés dans des gorges 43 et 44 du cylindre 29. L'extrémité gauche du piston creux 23 est muni d'un joint d'étanchéité 45 qui s'applique, lorsque l'on est en position de test, qui est celle représentée sur les figures 1 et 2, contre une collerette d'appui 46 solidaire de l'extrémité ouverte 2 de la chambre pivotante 1.

Le fonctionnement est le suivant:

La chambre pivotante 1 est dans la position haute figurée par le trait mixte 15 sur la figure 1.

Le piston 23 de l'organe d'accostage 8 est en position reculée c'est-à-dire repoussé dans le sens de la flèche 60 par une pression pneumatique envoyée dans la conduite 37.

On laisse alors passer dans la chambre pivotante 1 le nombre désiré de circuits à tester en rétractant la butée 18. Les circuits qui passent sont alors comptés par le système de comptage 16-17. La chambre pivotante est alors placée en position horizontale en alignement avec l'organe d'accostage 8 puis on envoie la pression dans la conduite 38 afin de déplacer dans le sens de la flèche 50 le piston creux 23 de manière à réaliser la liaison étanche.

On effectue le test de manière habituelle puis, celui-ci effectué, on recule le piston 23, on fait pivoter vers le bas la chambre pivotante 1 et, selon le résultat du test, bon ou mauvais, les circuits contenus dans la chambre sont aiguillés soit vers la voie 10, soit vers la voie 11. Un tube de réception 47 des circuits testés et reconnus satisfaisants est ficé en bout de la voie 11.

## Revendications

1. Machine pour contrôler l'étanchéité de pièces par la méthode dite de ressuage, caractérisée en ce qu'elle comprend une chambre de test pivotante (1) dont une première extrémité (2) est ouverte et dont une seconde extrémité (3) opposée est fermée et comporte un axe de rotation horizontal (4), une rampe de chargement (7) desdites pièces, un organe d'accostage (8) permettant de réaliser, sur commande, la communication étanche entre un détecteur de fuite et l'extrémité ouverte de ladite chambre, une rampe de déchargement (9) à deux voies (10, 11) munie de moyens d'orientation (12, 13) vers l'une ou l'autre voie et des moyens (5) pour commander le pivotement de ladite chambre dans trois orientations possibles, la première selon un angle α au-dessus de l'horizontale alignant la chambre (1) avec la rampe de chargement (7), la deuxième selon l'horizontale en alignement avec ledit organe d'accostage (8), et la troisième selon un angle β au-dessous de l'horizontale en alignement de la rampe de déchargement (9), les angles α et β étant suffisants pour permettre le déplacement de ladite pièce dans la chambre par simple gravité.

2. Machine selon la revendication 1, caractérisée en ce que ledit organe d'accostage comprend un piston creux (23) relié par une liaison souple (22) audit détecteur de fuites, ledit piston pouvant coulisser à l'intérieur d'un cylindre fixe (29), le cylindre et le piston coopérant avec des moyens de commande (37, 38) permettant le déplacement dans un sens et dans l'autre du piston mobile dans le cylindre fixe, l'extrémité ouverte de ladite chambre et l'extrémité du piston opposée à sa liaison avec ledit détecteur comportant des moyens (45, 46) assurant l'étanchéité de la jonction entre la chambre et ledit piston lorsque le piston est en position d'accostage contre l'extrémité ouverte de ladite chambre.

## Patentansprüche

1. Maschine zur Überprüfung der Dichtheit von Bauteilen mit Hilfe der sogenannten «Schwitzmethode», dadurch gekennzeichnet, daß sie aufweist: eine schwenkbare Testkammer (1), deren erstes Ende (2) offen und deren zweites, gegenüberliegendes Ende (3) geschlossen ist und die eine waagrechte Drehachse (4) besitzt, eine Laderampe (7) für die Bauteile, ein Ankopplungsorgan (8), das es erlaubt, auf einen Steuerbefehl hin die dichte Verbindung zwischen einem Leckdetektor und dem offenen Ende der Kammer herzustellen, eine Zweiwege-Entladerampe (9) mit Mitteln (12, 13) zur Weiterleitung der Bauteile in Richtung des einen (10) oder des anderen Weges (11), und Mittel (5) zum Steuern der Schwenkung der Kammer in drei mögliche Positionen, nämlich einer ersten Position mit einem Winkel α oberhalb der Waagrechten, bei der die Kammer mit der Laderampe (7) fluchtet, der zweiten Position entsprechend der Waagerechten in Flucht mit dem Ankopplungsmittel (8) und der dritten Richtung unter einem Winkel β unterhalb der Waagrechten, unter Ausfluchtung mit der Entladerampe (8), wobei die Winkel α und β so groß sind, daß eine Bewegung des Bauteils in der Kammer durch bloße Schwerkraft möglich ist.

2. Maschine nach Anspruch 1, dadurch gekennzeichnet, daß das Ankopplungsorgan einen beweglichen, hohlen Kolben 23 umfaßt, der über eine flexible Verbindung (22) mit dem Leckdetektor verbunden ist, wobei der Kolben im Inneren eines ortsfesten Zylinders (29) gleiten kann und der Zylinder und der Kolben mit Steuermitteln (37, 38) zusammenwirken, die die Verschiebung des beweglichen Kolbens im ortsfesten Zylinder in der einen und in der anderen Richtung ermöglichen, und daß das offene Ende der Kammer sowie dasjenige Ende des Kolbens, welches der Verbindung der Kammer mit dem Detektor gegenüberliegt, Mittel (45, 46) zum Abdichten der Verbindung zwischen der Kammer und dem beweglichen Kolben besitzen, wenn der Kolben in der Ankopplungsposition mit dem offenen Ende der Kammer steht.

## Claims

1. A machine for testing the tightness of parts by the «sweat» method, characterized in that the machine comprises: a pivoting test chamber (1) having an open first end (2) and an opposite, closed second end (3), and including a horizontal axis of rotation (4), a chute (7) for loading said parts, a docking member (8) permitting, by a command signal, to put the open end of said chamber into sealed communication with a leak detector, an unloading chute (9) having two channels (10, 11) equipped with means for switching items into the direction of the one or the other channel and control means (5) for tilting said chamber to occupy three possible positions: a first position inclined upwardly above the horizontal at an angle α, with the chamber (1) in alignment with the loading chute (7), a second position being horizontal and in alignment with said docking means (8), and a third position inclined downwardly below the horizontal at an angle β and in alignment with the unloading chute (9), said angles α and β being sufficient to ensure the displacement of said part within the chamber soleley under the effect of gravity.

2. A machine according to claim 1, characterized in that said docking member comprises a hollow movable piston (23) connected by a flexible link (22) to said leak detector, said piston being able to slide inside a fixed cylinder (29), the cylinder and the piston co-operating with control means (37, 38) adapted to enable the movable piston to travel in either of two opposite directions within the fixed cylinder, the open end of said chamber and the end of the piston farthest from its connection to said detector including means (45, 46) adapted to ensure the tightness of the junction between the chamber and said movable piston, when the piston is in its docking position against the open end of said chamber.

# FIG.1

FIG.2

FIG.3

EP 0 208 232 B1

FIG. 4

EP 0 208 232 B1